# EUROPÄISCHE PATENTSCHRIFT

(11) **EP 0 842 739 B1**
(45) Veröffentlichungstag und Bekanntmachung des Hinweises auf die Patenterteilung: **02.05.2002**
(21) Anmeldenummer: 97202962.3
(22) Anmeldetag: 26.09.1997
(51) Int. Cl.: B24C 1/00, B24C 11/00

(54) **Verfahren und Vorrichtung zum mechanischen Entfernen einer Fremdstoffbeschichtung von einem Basismaterial**
Method and device for mechanically removing a foreign matter coating from a base material
Procédé et dispositif pour enlever mécaniquement un revêtement de matière étrangère à partir d'un matériau de base

(30) Priorität: 04.10.1996 DE 19640945
(43) Veröffentlichungstag der Anmeldung: 20.05.1998
(73) Patentinhaber: Philips Corporate Intellectual Property GmbH, 52064 Aachen (DE); Koninklijke Philips Electronics N.V., 5621 BA Eindhoven (NL)
(72) Erfinder: Rien, Willi, c/o Philips Patentverwaltung GmbH, 22335 Hamburg (DE)
(74) Vertreter: von Laue, Hanns-Ulrich, Dipl.-Ing.

(56) Entgegenhaltungen:
- DE-A- 4 402 247
- DE-A- 4 403 173
- DE-U- 8 803 364
- GB-A- 2 137 533
- US-A- 5 044 129
- US-A- 5 261 191
- PATENT ABSTRACTS OF JAPAN vol. 018, no. 354 (M-1632), 5. Juli 1994 & JP 06 091652 A (SUMITOMO DOW LTD;OTHERS: 01), 5. April 1994

## Beschreibung

Die Erfindung bezieht sich auf ein Verfahren gemäß dem Oberbegriff des Anspruch 1.

Bei der Herstellung plattenförmiger Aufzeichnungsträger hoher Speicherdichte, z.B. optisch auslesbarer digitaler Audio-Platten (CDs), werden wegen der hohen Anforderungen an die Formbeständigkeit solcher Platten hochwertige Kunststoffe, z.B. Polycarbonat, verarbeitet. In der Praxis ist die Fertigungsausschußrate bei der Herstellung derartiger Informationsplatten relativ groß. Zur Verminderung der Abfallrate wird daher das Basismaterial für die plattenförmigen Informationsträger, in der Regel Polycarbonat, zurückgewonnen. Dies geschieht in einem Recycling-Verfahren, bei dem das Polycarbonat in Granulatform erneut wieder für die Herstellung der plattenförmigen Informationsträger benutzt wird. Dazu müssen die auf dem Basismaterial der Informationsplatte befindlichen Fremdstoffe zuverlässig entfernt werden, um die benötigte Reinheit für die Wiederverwendung zu erhalten.

Diese auf dem Basismaterial der Informationsplatte befindliche Fremdstoffbeschichtung besteht in der Regel aus einer auf dem Basismaterial liegenden dünnen Aluminiumschicht, aus einem auf der Aluminiumschicht liegenden strahlenvernetzten Acrylat und aus einer oder mehreren, auf dem Acrylat liegenden Druckfarbenschicht.

Ein Verfahren der eingangs genannten Art ist z.B. durch die DE 41 23 199 C2 bekannt geworden. Bei diesem bekannten Verfahren wird die Fremdstoffbeschichtung von dem Basismaterial durch einen spanabhebenden, parallel zur Oberfläche des Informationsträgers geführten Schnitt entfernt. Dieses Verfahren benötigt eine dazu angepaßte besondere Maschine. Ferner muß diese Maschine so gestaltet sein, daß auch die stirnseitig an der Informationsplatte angebrachten Fremdstoffschichten entfernt werden. Die Materialverluste können bis zu 20% betragen.

In der genannten Entgegenhaltung werden darüber hinaus weitere Möglichkeiten zum Entschichten von derartigen Informationsplatten beschrieben. So ist es z.B. möglich, die Fremdstoffbeschichtung mit Hilfe eines chemischen Verfahrens zunächst zu lösen und dann zu entfernen. Nachteilig ist dabei der Anfall einer großen Menge von Ablaugen, die mit großem Aufwand entsorgt werden müssen. Des weiteren wird in der genannten Schrift ein mechanisches Verfahren beschrieben, wobei die Fremdstoffschicht durch Anwendung eines Partikelstrahles oder eines abrasiven Werkstoffes, das zum Abschleifen des Fremdmaterial führt, entfernt wird. Ein solches Verfahren ist z.B. in der DE 38 16 651 C1 für die Reparatur beschädigter Schutzschichten einer Compact-Disc beschrieben. Dieses Verfahren ist unwirtschaftlich durch hohe Einsatzverluste an Strahlungsmitteln.

Durch den Prospekt "GREEN TECH, Industriereinigung ohne Chemie," ist ein Verfahren und ein Gerät zur Reinigung verschiedener Stoffe, z.B. zur Reinigung von Metall, Kunststoff, Stein, Glas oder zur Reinigung von elektrischen Bauteilen, bekannt geworden. Dabei wird Trockeneis (gefrorenes Kohlendioxyd-CO₂) mit Druckluft auf die Verunreinigungen gestrahlt. Das Kohlendioxyd, in einem Spezialverfahren zur reiskorngroßen Trockeneis-Pellets verdichtet, arbeitet sich dabei durch die Verunreinigung. Dadurch können die verunreinigten Oberflächen sehr schnell rückstandsfrei gereinigt werden.

Das Trockeneis (gefrorenes Kohlendioxyd-CO₂), weist dabei eine Temperatur von etwa -80°C auf. Dieses zur industriellen Reinigung an sich bekannte und in dem genannten Prospekt beschriebene Verfahren hat den Vorteil, daß die Beschichtung ohne Feuchtigkeit und ohne wesentliche Verletzung des Basismaterials entfernt werden kann. Ein weiterer Vorteil besteht darin, daß bei einer Reinigung mit Trockeneis keinerlei Rückstände durch das Reinigungsmittel auftreten, da die Trockeneis-Pellets sich nach dem Auftreffen auf das Basismaterial auflösen.

Aus DE 44 03 173 A1 ist ein Verfahren zur Reinigung von metallisiert plattenförmigen Informationsträger wie CDs bekannt, bei dem diese mit einem Granulat aus Kunststoff bestrahlt werden.

Ein weiteres Reinigungsverfahren ist aus DE-A-44 02 247 bekannt. Dabei wird ein Strömungsmittel, das kleine Argontröpfchen enthält, aus einer Düse in eine drucklose Atmosphäre geblasen. Dadurch entstehen je nach Temperatur kleine oder größere Argonpartikel, die mit Druck auf die Oberfläche eines zu reinigenden Objekts geblasen werden.

Aus JP-A-06 091652 ist ein Verfahren bekannt, bei welchem die Oberfläche von Gegenständen mittels eines Sandstrahlgebläses gereinigt wird. Dazu werden kleine Partikel unter Druck auf die Oberfläche des zu reinigenden Gegenstands geblasen.

Der Erfindung liegt die Aufgabe zugrunde, das Verfahren der eingangs genannten Art zu vereinfachen.

Diese Aufgabe wird durch den Auspruch 1 gelöst. Durch Aufbringen der tiefgekühlten Partikel auf die Fremdstoffbeschichtung entstehen innere Spannungen in der Fremdstoffbeschichtung, durch die der Verbund zwischen der Fremdstoffbeschichtung und dem Basismaterial gelockert wird. Dadurch, daß die Partikel gleichzeitig unter Druck aufgebracht werden, werden die so gelockerten Teile von dem Basismaterial auf einfache Weise entfernt. Dabei verbleiben auf dem Basismaterial, das für neue Verwendung zurückgewonnen werden soll, keinerlei Rückstände, so daß so gereinigte Basismaterial direkt für die Wiederverwendung zur Verfügung steht.

Eine Ausgestaltung der Erfindung ist gekennzeichnet durch die Verwendung von Metallpartikeln. Dieses Verfahren hat den Vorteil, daß die beim Reinigen verwendeten Metallpartikel nach dem Reinigungsvorgang des Basismaterials nach entsprechender Aufbereitung, Reinigung und Trennung von Fremdstoffpartikeln wiederverwendet werden können.

Eine weitere Ausgestaltung der Erfindung ist gekennzeichnet durch die Verwendung von Kunststoffpartikeln, die ebenfalls nach dem Reinigungsvorgang des Basismaterials nach entsprechender Aufbereitung wiederverwendet werden können.

Eine weitere Ausgestaltung der Erfindung ist gekennzeichnet durch eine runde, vorzugsweise kugelige, Oberfläche der aus Metall oder Kunststoff bestehenden Partikel. Diese Bauweise wird ausreichen, wenn die Verbindung zwischen der Beschichtung und dem Basismaterial nicht allzu groß ist.

Eine weitere Ausgestaltung der Erfindung ist gekennzeichnet durch die Verwendung von scharfkantigen Partikeln. Diese Bauweise hat den Vorteil, daß die unter Druck aufgebrachten Partikel die Beschichtung sehr schnell durchstoßen, so daß die Verbindungsstelle zwischen der Beschichtung und dem Basismaterial sehr schnell freiliegt und der Strahl somit unmittelbar angreifen kann. Hier muß allerdings eine gewisse Beschädigung des Basismaterials in Kauf genommen werden.

Eine weitere Ausgestaltung der Erfindung besteht darin, daß die Partikel vor ihrer Verwendung auf eine zum Ablösen erforderliche tiefe Temperatur gekühlt werden. Vorzugsweise werden die Partikel dabei in einem Stickstoffbad auf ca. -190°C gekühlt.

Eine weitere Ausgestaltung der Erfindung besteht darin, daß die Partikel nach ihrer Verwendung von den Fremdstoffteilen gesäubert und in einem besonderen Verfahren wieder aufbereitet werden.

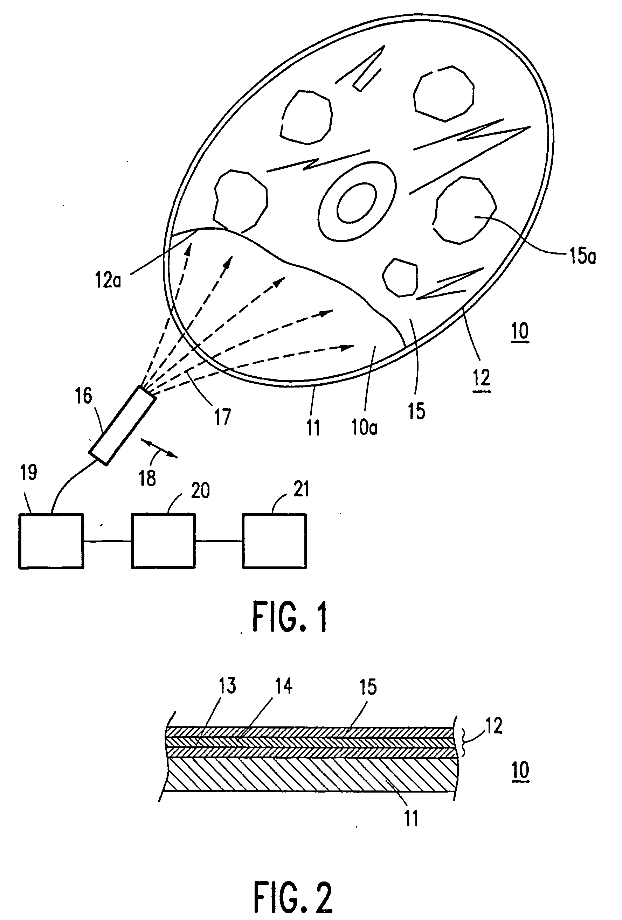

In der Zeichnung ist in Fig. 1 und 2 ein Ausführungsbeispiel des Gegenstandes gemäß der Erfindung schematisch dargestellt.
Fig. 1 zeigt eine perspektivische Darstellung einer handelsüblichen CD und
Fig. 2 einen schematischen, nicht maßstabgetreuen Schnitt durch die CD.

Die CD 10 enthält als Basismaterial einen plattenförmigen Träger 11 aus Polycarbonat und eine auf diesen Träger 11 aufgebrachte, aus Fremdstoffen bestehende Beschichtung 12. Diese Fremdstoffbeschichtung 12 besteht aus einer auf den Träger 11 aufgebrachten dünnen Aluminiumschicht 13, aus einer auf diese Schicht 13 aufgebrachten UV-Schutzlackschicht 14 und aus einer auf diese Schutzlackschicht 14 aufgebrachten Farbschicht 15, die z.B. ein Bild 15a oder Schriftzeichen enthalten kann.

Mit 16 ist schematisch eine Düse bezeichnet, aus welcher unter hohem Druck ein Partikelstrahl 17 austritt und gegen die Fremdstoffschicht 12 gerichtet ist. Aus Fig. 1 ist erkennbar, daß der Bereich 10a der CD 10 bereits durch den Partikelstrahl 17 von der Fremdstoffschicht 15 befreit ist. Durch Weiterführen des Partikelstrahles 17, der vorzugsweise auf eine von der Schicht 12 gebildete Kante 12a gerichtet wird, läßt sich die Fremdstoffbeschichtung 12 sehr leicht von dem Träger 11 entfernen. Die Düse 16 kann nach Belieben in Richtung 18 hin und her geschwenkt werden. Mit 19 ist ein Behälter zur Aufnahme der Partikel, mit 20 ein Kompressor und mit 21 eine Vorrichtung zum Tielkühlen der Partikel bezeichnet.

## Patentansprüche

1. Verfahren zum mechanischen Entfernen einer Fremdstoffbeschichtung (12) von einem Basismaterial (11) eines plattenförmigen optisch auslesbaren Informationsträgers (10), durch einem unter Druck aufgebrachten Partikel strahl aus Patikeln
**dadurch gekennzeichnet, daß** die Partikel zunächst tiefgekühlt werden und daß die die Fremdstoffe enthaltende Beschichtung (12) von dem Basismaterial (11) durch den unter Druck aufgebrachten, tiefgekühlten Partikelstrahl (17) entfernt wird.

2. Verfahren nach Anspruch 1, **gekennzeichnet durch** die Verwendung von Metallpartikeln.

3. Verfahren nach Anspruch 1, **gekennzeichnet durch** die Verwendung von Kunststoffpartikeln.

4. Verfahren nach einem der Ansprüche 1 bis 3, gekennzeichner durch eine runde Oberfläche der Partikel.

5. Verfahren nach einem der Ansprüche 1 bis 3, **gekennzeichnet durch** die Verwendung von scharfkantigen Partikeln.

6. Verfahren nach einem der Ansprüche 1 bis 6, **dadurch gekennzeichnet, daß** die Partikel vor ihrer Verwendung auf eine zum Ablösen der Beschichtung (12) erforderliche tiefe Temperatur gekühlt werden.

7. Verfahren nach Anspruch 6, **gekennzeichnet durch** die Verwendung eines Stickstoffbades mit einer Temperatur von ca. -190°C.

8. Verfahren nach einem der Ansprüche 1 bis 6, **dadurch gekennzeichnet, daß** die Partikel nach ihrer Verwendung von den Fremdstoffteilen gesäubert und in einem besonderen Verfahren wieder aufbereitet werden.

## Claims

1. A method and device for mechanically removing a foreign matter coating (12) from a base material. (11) of a disc-shaped, optically readable information carrier (10) by means of a jet of particles applied under pressure, **characterized in that** said particles are first deep-frozen, and **in that** the layer (12) comprising the foreign matter is removed from the base material (11) by means of said jet of deep-frozen particles (17) which is applied under pressure.

2. A method as claimed in Claim 1, **characterized by** the use of metal particles.

3. A method as claimed in Claim 1, **characterized by** the use of synthetic-resin particles.

4. A method as claimed in any one of the Claims 1 to 3, **characterized by** a round surface of the particles.

5. A method as claimed in any one of the Claims 1 to 3, **characterized by** the use of particles with sharp edges.

6. A method as claimed in any one of the Claims 1 to 5, **characterized in that** the particles are cooled down to a low temperature necessary for the removal of the layer (12) before they are used.

7. A method as claimed in Claim 6, **characterized by** the use of a nitrogen bath with a temperature of approximately -190 °C.

8. A method as claimed in any one of the Claims 1 to 6, **characterized in that** the particles are divested of any foreign matter remnants after their use and are regenerated in a special process.

## Revendications

1. Procédé pour enlever mécaniquement un revêtement de matières étrangères (12) à partir d'un matériau de base (11) d'un support d'informations (10) lisible optiquement en forme de disque, par un faisceau de particules gelées, appliqué sous pression, **caractérisé en ce que** les particules sont d'abord gelées et le revêtement (12) contenant les matières étrangères est enlevé du matériau de base (11) par un faisceau de particules (17) gelées appliqué sous pression.

2. Procédé selon la revendication 1, **caractérisé par** la mise en oeuvre de particules métalliques.

3. Procédé selon la revendication 1, **caractérisé par** la mise en oeuvre de particules en plastique.

4. Procédé selon l'une des revendications 1 à 3, **caractérisé par** la surface ronde des particules.

5. Procédé selon l'une des revendications 1 à 3, **caractérisé par** la mise en oeuvre de particules à angles vifs.

6. Procédé selon l'une des revendications 1 à 6, **caractérisé en ce que** les particules sont refroidies avant leur utilisation à une basse température nécessaire pour le détachement du revêtement (12).

7. Procédé selon la revendication, **caractérisé par** la mise en oeuvre d'un bain d'azote à une température d'environ -190°C.

8. Procédé selon l'une des revendications 1 à 6, **caractérisé en ce qu'**après leur utilisation, les particules sont nettoyées des particules étrangères et subissent un nouveau traitement au cours d'un procédé spécial.
